# EUROPEAN PATENT APPLICATION

(11) **EP 3 157 278 A1**
(43) Date of publication of application: **19.04.2017**
(21) Application number: 14894400.2
(22) Date of filing: 17.10.2014
(51) Int. Cl.: H04W 4/24

(54) **POLICY CONTROL AND CHARGING METHOD, APPARATUS AND DEVICE**

(30) Priority: 11.06.2014 CN 201410256789
(71) Applicant: ZTE Corporation, Shenzhen, Guangdong 518057 (CN)
(72) Inventor: ZHANG, Lu, Shenzhen Guangdong 518057 (CN); GAO, Yang, Shenzhen Guangdong 518057 (CN); WANG, Mengxiao, Shenzhen Guangdong 518057 (CN)
(74) Representative: Awapatent AB
(86) International application number: PCT/CN2014/088863
(87) International publication number: WO 2015/188555

(57) **Abstract**

Disclosed are a method, apparatus and device for policy control and charging. The method for policy control and charging includes: when a Policy and Charging Rule Function (PCRF) is selected as a PCRF of a user by a Policy and Charging Enforcement Function (PCEF), sending the PCRF and the user corresponding to the PCRF to a storage device, and/or, when a PCEF determines a PCRF selected for the user, sending the PCRF selected for the user by the PCEF to the storage device (S1402); acquiring, by an Application Function (AF), the PCRF selected for the user by the PCEF from the storage device (S1404); and performing by the AF, policy control and charging for the user by utilizing the acquired PCRF (S1406). By the method, apparatus and device, it is guaranteed that the PCRFs used by the AF and the PCEF are the same.

## Description

### Technical Field

The present invention relates to the field of communications, and particularly relates to a method, apparatus and device for policy control and charging.

### Background of the Related Art

An IP Multimedia Subsystem (IMS) is the development direction of future multimedia communication, and is also the most important component of the next-generation network. The IMS is a subsystem which is proposed by the Third Generation Partnership Project (3GPP) and supports an IP multimedia service, is obviously characterized by adopting a Session Initial Protocol (SIP) system, wherein communication is unrelated to an access mode, and can have various abilities of separation in various multimedia service control functions and bearing capacity, separation of calling and a session, separation of application and services, separation of services and networks, fusion of services of a mobile network and the internet and the like.

Long Term Evolution (LTE) is evolution of a radio communication technology led by the 3GPP and mainly takes charge of evolution of a radio air interface technology, and System Architecture Evolution (SAE) takes charge of evolution of an entire network architecture, is evolution considering from an entire system architecture in order to fulfill the aim proposed by the LTE and mainly includes: an access network, wherein the access network is flattened and subjected to IP-based processing, physical entities of a Radio Network Controller (RNC) are removed, functional entities are decomposed to a base station and a core network element, most of functions are set at an E-Node B so as to reduce time delay and reinforce the scheduling ability and a small part of functions are set at a core network so as to reinforce mobility management; and the core network, wherein a user surface and a control surface are separated.

As the core network of an evolution system, the SAE is uniformly called as an Evolved Package Core (EPC) in the later period. An EPC network consists of the following network elements:
1. A Mobility Management Entity (MME), which is used for control code related works of mobility management, processing of non-access layer signaling, management of user mobility management contexts and the like;
2. A Serving Gateway (S-GW), which is an access gateway device connected with an Evolved Universal Terrestrial Radio Access Network (E-UTRAN), forwards data between the E-UTRAN and a Packet Data Network Gateway (P-GW) and is used for performing caching of paging wait data;
3. A P-GW, which is a border gateway of the EPC and a Public Data Network (PDN) and is used for access to the PDN, i.e., data forwarding between the EPC and the PDN;
4. A Home Subscriber Server (HSS), which stores information of services subscribed by users and local information.

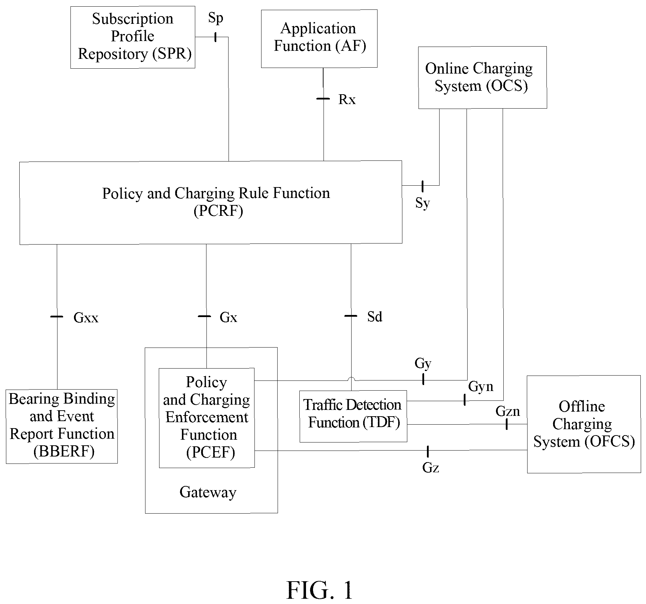

A Policy Control and Charging (PCC) subsystem is a network resource and charging policy control architecture defined by the 3GPP in the R7 stage, and aims to provide different services for users by service flow bearing resource guarantee and a flow charging policy. An entire functional architecture of PCC is as shown in FIG. 1, and includes the following parts:
1. A Policy and Charging Rule Function (PCRF). The function entity includes a policy control decision and a function based on flow charging control, and the PCRF receives inputs from a Policy and Charging Enforcement Function (PCEF), a Subscription Profile Repository (SPR) and an Application Function (AF) and provides network control functions related to service data flow detection, gating, Quality of Service (QoS) based network control functions and flow-based charging (except for credit control) to the PCEF. A PCC decision is made by combining custom information of the PCRF.
2. The PCEF, which mainly includes functions of detection of service data flow, policy enforcement and flow-based charging. The function entity is positioned in a gateway, e.g., a Gateway GPRS Support Node (GGSN) gateway of a General Packet Radio Service (GPRS), the P-GW of the EPC and a Packet Date Gateway (PDG) in a Wireless Local Area Network (WLAN), and also can be independently deployed.
3. The AF. The function entity provides an application service unit and mainly performs dynamic policy/charging control of an Internet Protocol Connectivity Access Network (IP-CAN) user surface. Such services need to be subjected to dynamic policy and charging control. The AF, by an Rx reference point, transmits dynamic session information required by the PCRF, receives specific information of the IP-CAN and confirms an IP-CAN bearing layer event.
4. An Online Charging System (OCS). The function provides credit control functions based on users and service data flow. The OCS is mainly constituted of an online acquisition module, a charging control module, a rating module, a balance management module and the like, achieves an online charging function, and is matched with other charging network element devices (devices for triggering online charging event requests based on sessions and events, e.g., a Service Control Point (SCP), a Content Charging Gateway (CCG), an Integrated Service Management Platform (ISMP) and the like) to perform real-time traffic control.
5. An Offline Charging System (OFCS). The function provides charging functions based on users and service data flow. The main functions include a customer service, service management, charging, settlement, accounting treatment, system management and the like. The OFCS is a post-paid processing system aiming at telephone bills and accounts.
6. An SPR. A user attribute storage logic entity includes information related to all subscribers or subscriptions. Subscription information provided by the SPR includes (the subscription information of each PDN): services allowed by the subscribers; a priority (optional) of each allowed service; QoS information allowed by the subscribers; charging related information of subscriber services, e.g., an access type, position information and use times; types of the subscribers; and the like. The SPR is possibly associated with a plurality of databases distributed in an operator network. The SPR interacts with the PCRF by an Sp reference point.
7. A Bearing Binding and Event Report Function (BBERF), which is a policy enforcement point for performing bearing binding, performing uplink bearing binding check and performing event report to the PCRF when Gxx exists. The function entity is positioned in a Gateway (GW), e.g., the S-GW implementing 3GPP access on the basis of an S5/S8 interface by using an Proxy Mobile IP (PMIP), a HRPD Serving Gateway (HSGW) in High Rate Packet Data (HRPD) and an Access Gateway (A-GW) in a non-3G access situation.
8. A Traffic Detection Function (TDF), which executes application detection and reports a condition that an application and service data traffic description thereof are detected to the PCRF. If the information is not detected, the TDF executes gating, redirection and bandwidth limitation. If the TDF detects application information, the TDF submits the application information to the PCRF to generate a decision and the PCEF executes control.

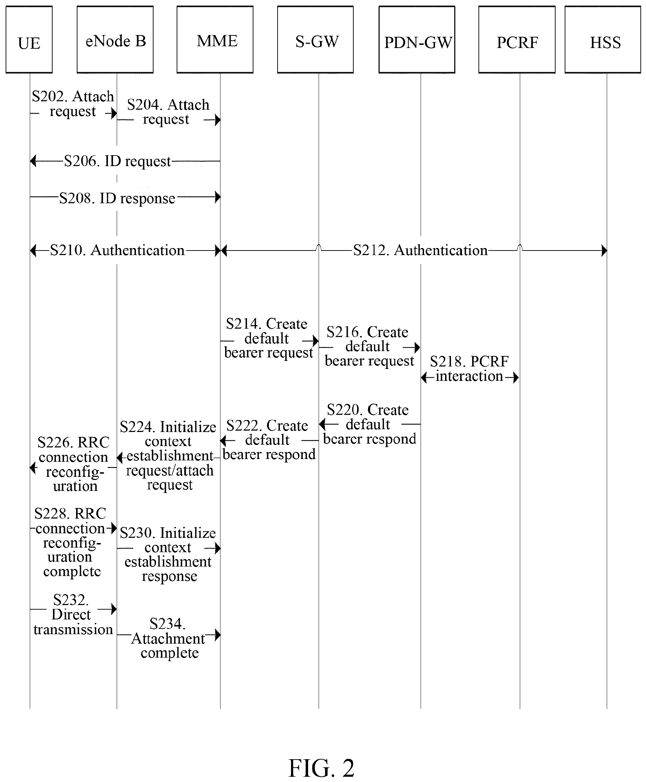

FIG. 2 is a flow chart of attachment flow of an LTE terminal in the related art. As shown in FIG. 2, the attachment flow includes the step S202 to the step S234.

In step S202 to step S204, the terminal sends an attachment request to the MME.

In step S206, the MME sends an Identity (ID) request to the terminal.

In step S208, the terminal returns an ID response to the MME.

In step S210 to step S212, the terminal and the HSS complete authentication.

In step S214 to step S216, the MME requests a Packet Data Network-Gateway (PDN-GW) to create a default bearer.

In step S218, the PDN-GW interacts with the PCRF, and the PCRF is selected.

In step S220 to step S222, a default bearer response is created.

In step S224 to step S230, a context establishment request is initialized.

In step S232 to step S234, attachment is completed.

When one LTE user is attached to the EPC network, as the PCEF, the P-GW may select a PCRF as a policy and charging control point, and when the specific application AF is in use, the same PCRF also needs to be selected with the purpose of controlling the PCEF (P-GW) when the user is attached to implement policy and charging control. How to guarantee the P-GW and the AF to select the same PCRF becomes the problem which needs to be solved currently. In the related art, solutions for selecting the PCRF generally include the following types:
1. The PCEF and the AF operate by using a same-PCRF selection algorithm to obtain the same PCRF. For example, both the PCEF and the AF perform operation according to an International Mobile Subscriber Identity (IMSI) of a user to obtain the same PCRF.
2. The PCEF and the AF send messages to the PCRF through a Diameter Routing Agent (DRA) network, and the DRA network determines the same PCRF. Particularly, the PCEF and the AF send the messages to the DRA network, the DRA network performs selection according to a certain rule and for example, performs operation according to the IMSI, so that the messages are guaranteed to be sent to the same PCRF.

The solutions above are feasible, but also have the obvious defects that: 1, a plurality of network elements are requested to keep consistent in algorithm, which is unbeneficial to network maintenance; 2, when the number of the PCRFs is increased or reduced, a plurality of network elements need to change a computing rule, which is unbeneficial to network maintenance; and 3, when a certain PCRF is in failure or is restarted, a plurality of network elements need to be guaranteed to all sense a state of the PCRF, and the computing rule needs to be regulated, which are easy to generate inconsistent computing results and cause a service failure.

Aiming at the problems in the related art, currently, no effective solution is proposed.

### Summary of the Invention

Aiming at the problem that in the related art, the method for ensuring consistency of PCRFs of users is complex and unreliable, the present invention provides a method, apparatus and device for policy control and charging so as to at least solve the above problem.

According to one embodiment of the present invention, provided is a method for policy control and charging, including: acquiring, by an Application Function (AF), a pre-stored Policy and Charging Rule Function (PCRF) selected for a user by a Policy and Charging Enforcement Function (PCEF) from a storage device, wherein, the storage device stores a corresponding relationship between the user and the PCRF; and performing, by the AF, policy control and charging for the user by utilizing the acquired PCRF.

Alternatively, the step of acquiring, by the AF, the pre-stored PCRF selected for the user by the PCEF from the storage device includes: in response to a first request of the user, sending, by the AF, a second request to the storage device, wherein, the second request carries a user identifier of the user, and the user identifier is used for distinguishing different users; and receiving, by the AF, a response of the storage device to the second request, and acquiring the PCRF selected for the user by the PCEF from the response.

Alternatively, the step of acquiring, by the AF, the pre-stored PCRF selected for the user by the PCEF from the storage device includes: receiving, by the AF, the PCRF which is selected for the user by the PCEF and is pushed by the storage device, wherein, the storage device is used for pushing the PCRF selected for the user by the PCEF to the AF when the PCRF selected for the user by the PCEF is changed.

Alternatively, before the AF receives the PCRF of the user, which is pushed by the storage device, the method further includes: sending, by the AF, a subscription request to the storage device, wherein, the subscription request is used for requesting the storage device to push the PCRF selected for the user by the PCEF to the AF when the PCRF selected for the user by the PCEF is changed.

Alternatively, the storage device includes at least one of the followings: a Home Subscriber Server (HSS), a Subscription Profile Repository (SPR), a User Data Center (UDC), a User Data Repository (UDR) and a preset device dedicated to storing PCRFs of the user.

According to another embodiment of the present invention, provided is a method for sending a PCRF , including: acquiring, by a storage device, a PCRF selected for a user by a Policy and Charging Enforcement Function (PCEF) from the PCRF or the PCEF; and storing, by the storage device, the PCRF selected for the user by the PCEF, and sending the PCRF selected for the user by the PCEF to an Application Function (AF), wherein, the AF is used for performing policy control and charging for the user by utilizing the PCRF selected for the user by the PCEF.

Alternatively, the step of sending, by the storage device, the PCRF selected for the user by the PCEF to the AF includes: receiving, by the storage device, a first request which is sent by the AF and is used for requesting to acquire the PCRF of the user, wherein, the first request carries a user identifier of the user, and the user identifier is used for distinguishing different users; searching, by the storage device, the PCRF corresponding to the user identifier according to a corresponding relationship between the user and the PCRF; and sending, by the storage device, the PCRF corresponding to the user identifier to the AF.

Alternatively, the step of sending, by the storage device, the PCRF selected for the user by the PCEF to the AF includes: receiving, by the storage device, a second request of the AF, wherein, the second request is used for requesting to send the PCRF selected for the user by the PCEF to the AF when the PCRF selected for the user by the PCEF is changed; detecting, by the storage device, whether the PCRF selected for the user by the PCEF is changed; and sending, by the storage device, the PCRF selected for the user by the PCEF to the AF when the PCRF selected for the user by the PCEF is changed.

Alternatively, the step of storing, by the storage device, the PCRF selected for the user by the PCEF includes: storing, by the storage device, the PCRF selected for the user by the PCEF on a local storage apparatus and/or a network storage apparatus.

Alternatively, the storage device includes at least one of the followings: an HSS, an SPR, a UDC, a UDR and a preset device dedicated to storing PCRFs of the user.

According to yet another embodiment of the present invention, provided is a method for sending a PCRF, including: when a PCRF is selected as a PCRF of a user by a Policy and Charging Enforcement Function (PCEF), sending the PCRF and the user corresponding to the PCRF to a storage device, wherein, the storage device is used for storing the PCRF selected for the user by the PCEF and sending the PCRF selected for the user by the PCEF to an Application Function (AF); and/or, when a PCEF determines a PCRF selected for the user, sending the PCRF selected for the user by the PCEF to the storage device.

Alternatively, the storage device includes at least one of the followings: an HSS, an SPR, a UDC, a UDR and a preset device dedicated to storing PCRFs of the user.

According to further another embodiment of the present invention, provided is a method for policy control and charging, including: when a Policy and Charging Rule Function (PCRF) is selected as a PCRF of a user by a Policy and Charging Enforcement Function (PCEF), sending the PCRF and the user corresponding to the PCRF to a storage device, and/or, when a PCEF determines a PCRF selected for the user, sending the PCRF selected for the user by the PCEF to the storage device; acquiring, by an Application Function (AF), the PCRF selected for the user by the PCEF from the storage device; and performing, by the AF, policy control and charging for the user by utilizing the acquired PCRF.

Alternatively, the storage device includes at least one of the followings: an HSS, an SPR, a UDC, a UDR and a preset device dedicated for storing PCRFs of the user.

According to further another embodiment of the present invention, provided is an apparatus for policy control and charging, including: an acquisition module, arranged to acquire a pre-stored Policy and Charging Rule Function (PCRF) selected for a user by a Policy and Charging Enforcement Function (PCEF) from a storage device, wherein, the storage device stores a corresponding relationship between the user and the PCRF; and a control module, arranged to perform policy control and charging for the user by utilizing the acquired PCRF.

Alternatively, the acquisition module includes: a sending unit, arranged to, in response to a first request of the user, send a second request to the storage device, wherein, the second request carries a user identifier of the user, and the user identifier is used for distinguishing different users; and an acquisition unit, arranged to receive a response of the storage device to the second request, and acquire the PCRF selected for the user by the PCEF from the response.

Alternatively, the acquisition module includes: a receiving unit, arranged to receive the PCRF which is selected for the user by the PCEF and is pushed by the storage device, wherein, the storage device is used for pushing the PCRF selected for the user by the PCEF when the PCRF selected for the user by the PCEF is changed.

Alternatively, the storage device includes at least one of the followings: an HSS, an SPR, a UDC, a UDR and a preset device dedicated to storing PCRFs of the user.

According to further another embodiment of the present invention, provided is an apparatus for sending a PCRF, including: an acquisition module, arranged to acquire a PCRF selected for a user by a Policy and Charging Enforcement Function (PCEF) from the PCRF or the PCEF; a storage module, arranged to store the PCRF selected for the user by the PCEF; and a sending module, arranged to send the PCRF selected for the user by the PCEF to an Application Function (AF), wherein, the AF is used for performing policy control and charging for the user by utilizing the PCRF selected for the user by the PCEF.

Alternatively, the sending module includes: a first receiving unit, arranged to receive a first request which is sent by the AF and is used for requesting to acquire the PCRF of the user, wherein, the first request carries a user identifier of the user, and the user identifier is used for distinguishing different users; a searching unit, arranged to search the PCRF corresponding to the user identifier according to a corresponding relationship between the user and the PCRF; and a first sending unit, arranged to send the PCRF corresponding to the user identifier to the AF.

Alternatively, the sending module includes: a second receiving unit, arranged to receive a second request of the AF, wherein, the second request is used for requesting to send the PCRF selected for the user by the PCEF to the AF when the PCRF selected for the user by the PCEF is changed; a detection module, arranged to detect whether the PCRF selected for the user by the PCEF is changed; and a second sending unit, arranged to send the PCRF selected for the user by the PCEF to the AF when the PCRF selected for the user by the PCEF is changed.

Alternatively, the storage module is arranged to store the PCRF selected for the user by the PCEF on a local storage apparatus and/or a network storage apparatus.

Alternatively, the apparatus is arranged in at least one of the followings: an HSS, an SPR, a UDC, a UDR and a preset device dedicated to storing PCRFs of the user.

According to further another embodiment of the present invention, provided is an apparatus for sending a PCRF, including: a sending module, arranged to, when a PCRF is selected as a PCRF of a user by a Policy and Charging Enforcement Function (PCEF), send the PCRF and the user corresponding to the PCRF to a storage device, wherein, the storage device is used for storing the PCRF selected for the user by the PCEF and sending the PCRF selected for the user by the PCEF to an Application Function (AF).

Alternatively, the storage device includes at least one of the followings: an HSS, an SPR, a UDC, a UDR and a preset device dedicated to storing PCRFs of the user.

According to further another embodiment of the present invention, provided is an apparatus for sending a PCRF, including: a sending module, arranged to send a PCRF selected for a user by a Policy and Charging Enforcement Function (PCEF) to a storage device when the PCEF determines the PCRF selected for the user, wherein, the storage device is used for storing the PCRF selected for the user by the PCEF and sending the PCRF selected for the user by the PCEF to an Application Function (AF).

Alternatively, the storage device includes at least one of the followings: an HSS, an SPR, a UDC, a UDR and a preset device dedicated to storing PCRFs of the user.

According to further another embodiment of the present invention, provided is a device with an AF, including: a communication interface, arranged to communicate with a storage device, wherein, the storage device stores a corresponding relationship between a user and a Policy and Charging Rule Function (PCRF); a first processor, arranged to acquire a pre-stored PCRF selected for the user by a Policy and Charging Enforcement Function (PCEF) from the storage device; and a second processor, arranged to perform policy control and charging for the user by utilizing the acquired PCRF.

Alternatively, the storage device includes at least one of the followings: an HSS, an SPR, a UDC, a UDR and a preset device dedicated to storing PCRFs of the user.

According to further another embodiment of the present invention, provided is a storage device, including: a communication interface, arranged to communicate with a Policy and Charging Rule Function (PCRF), a Policy and Charging Enforcement Function (PCEF)and an Application Function (AF); a first processor, arranged to acquire the PCRF selected for a user by the PCEF from the PCRF or the PCEF; a storage apparatus, arranged to store the PCRF selected for the user by the PCEF; and a second processor, arranged to send the PCRF selected for the user by the PCEF to the AF, wherein, the AF is used for performing policy control and charging for the user by utilizing the PCRF selected for the user by the PCEF.

Alternatively, the storage apparatus includes a local storage apparatus and/or a network storage apparatus.

Alternatively, the storage device includes at least one of the followings: an HSS, an SPR, a UDC, a UDR and a preset device dedicated to storing PCRFs of the user.

According to further another embodiment of the present invention, provided is a device with a PCRF, including: a communication interface, arranged to communicate with a storage device, wherein, the storage device is used for storing a PCRF selected for a user by a Policy and Charging Enforcement Function (PCEF) and sending the PCRF selected for the user by the PCEF to an Application Function (AF); and a processor, arranged to send the PCRF and the user corresponding to the PCRF to the storage device when the PCRF is selected as the PCRF of the user by the PCEF.

Alternatively, the storage device includes at least one of the followings: an HSS, an SPR, a UDC, a UDR and a preset device dedicated to storing PCRFs of the user.

According to further another embodiment of the present invention, provided is a device with a PCEF, including: a communication interface, arranged to communicate with a storage device, wherein, the storage device is used for storing a Policy and Charging Rule Function (PCRF) selected for a user by a PCEF and sending the PCRF selected for the user by the PCEF to an Application Function (AF); and a processor, arranged to send the PCRF selected for the user by the PCEF to the storage device when the PCEF determines the PCRF selected for the user.

Alternatively, the storage device includes at least one of the followings: an HSS, an SPR, a UDC, a UDR and a preset device dedicated to storing PCRFs of the user.

According to the present invention, the storage device stores the PCRF selected for the user by the PCEF, and the AF acquires the PCRF selected for the user by the PCEF from the storage device, so that it is ensured that the PCRFs used by the PCEF and the AF are consistent.

### Brief Description of Drawings

The accompanying drawings illustrated herein are used for providing further understanding of the present invention and constitute one part of the present application; and the exemplary embodiments of the present invention and description thereof are used for explaining the present invention, but not intended to improperly limit the present invention. In the accompanying drawings:
FIG. 1 is a schematic diagram of a Policy Control and Charging (PCC) architecture in the related art;
FIG. 2 is a flow chart of attachment flow of a Long Term Evolution (LTE) terminal in the related art.
FIG. 3 is a flow chart of a method for policy control and charging according to an embodiment I of the present invention;
FIG. 4 is an apparatus policy control and charging according to an embodiment I of the present invention;
FIG. 5 is a structural block diagram of a device with an AF according to an embodiment of the present invention;
FIG. 6 is a flow chart of a method for sending a Policy and Charging Rule Function (PCRF) according to an embodiment II of the present invention;
FIG. 7 is a structural block diagram of an apparatus for sending a PCRF according to an embodiment II of the present invention;
FIG. 8 is a structural block diagram of a storage device according to an embodiment of the present invention;
FIG. 9 is a flow chart of a method for sending a PCRF according to an embodiment III of the present invention;
FIG. 10 is a first structural block diagram of an apparatus for sending a PCRF according to an embodiment III of the present invention;
FIG. 11 is a second structural block diagram of an apparatus for sending a PCRF according to an embodiment III of the present invention;
FIG. 12 is a structural block diagram of a device with a PCRF according to an embodiment of the present invention;
FIG. 13 is a structural block diagram of a device with a PCEF according to an embodiment of the present invention;
FIG. 14 is a flow chart of a method for policy control and charging according to an embodiment IV of the present invention;
FIG. 15 is a first schematic diagram of a PCC architecture according to an embodiment of the present invention;
FIG. 16 is a second schematic diagram of a PCC architecture according to an embodiment of the present invention;
FIG. 17 is a third schematic diagram of a PCC architecture according to an embodiment of the present invention;
FIG. 18 is a fourth schematic diagram of a PCC architecture according to an embodiment of the present invention;
FIG. 19 is a fifth schematic diagram of a PCC architecture according to an embodiment of the present invention;
FIG. 20 is a flow chart of an LTE terminal attachment flow according to an embodiment of the present invention;
FIG. 21 is a flow chart of indirectly acquiring a PCRF address from an HSS by an AF according to an embodiment of the present invention;
FIG. 22 is a first flow chart of directly acquiring a PCRF address from an HSS by an AF according to an embodiment of the present invention; and
FIG. 23 is a second flow chart of directly acquiring a PCRF address from an HSS by an AF according to an embodiment of the present invention.

### Preferred Embodiments of the Invention

The present invention will be illustrated in details in the following with reference to the accompanying drawings in connection with embodiments. It should be noted that in the case of no conflict, the embodiments in the present application and features in the embodiments can be combined mutually.

In the following embodiments, a Policy and Charging Rule Function (PCRF), a Policy and Charging Enforcement Function (PCEF), an Application Function (AF) among others may refer to devices or apparatus with related functions. When related function entities are arranged in the same device or apparatus, interaction among the function entities is internal interaction of the device or apparatus. When related function entities are arranged in different devices or apparatus, interaction among the function entities generally is interaction among the devices or apparatus.

In the following embodiments, interaction among the function entities and among the devices may be direct interaction, and also may be indirect interaction by an intermediate device. Direct interaction generally refers to direct communication among the devices via a network, indirect interaction generally refers to interaction completed among the devices via intermediate processing of other devices, intermediate processing of other devices includes, but is not limited to, processing and forwarding of a message, the intermediate devices also may have a logic function, i.e., one device requests to acquire data to an intermediate device or requests the intermediate device to send the data and the intermediate device sends the data to the device, and sometimes, both parties of indirect interaction do not know existence of the other party and interaction of both the parties is completed via an intermediate device.

In the following embodiments, similar expressions such as "first", "second" and the like may denote the same content, and also may denote different contents. For example, a first processor and a second processor may denote two different processors, and also may denote the same processor; and a first message and a second message may denote two different messages, and also may denote the same message. The mentioned same message may denote a message with the same function or name, and also may denote a sent message, and for example, a first parameter is carried in the first message and a second parameter is carried in the second message, which may refer to that the first parameter and the second parameter are simultaneously carried in one message.

In the following embodiments, devices with the PCRF, the PCEF and the AF may be devices in a communication network, in which functions of the PCRF, the PCEF and the AF are set, and also may be devices dedicated for executing the functions of the PCRF, the PCEF and the AF. As described in the following embodiment, the PCRF, the PCEF and the AF can be achieved in different devices (also called as network elements) in the network.

In the following embodiments, devices may be universal devices, and also may be special devices. A communication interface in the following embodiments may be a special hardware interface, and also may be a combination of a universal hardware interface and a software protocol. A processor in the following embodiments may be a special hardware processor, e.g., a programmable logic device, and functions of the processor are fixed in the programmable logic device in a firing mode; and the processor also may be a universal processor or a computer program unit stored in a storage medium, and the processor executes the computer program unit to achieve functions of the processor.

In the following embodiments, sending, acquisition and storage of the PCRF in the following may be sending, acquisition and storage of an identifier of the PCRF, the identifier may distinguish different PCRFs, and the identifier may be a PCRF address, a PCRF device number and the like, but not limited hereto.

It may be expected that methods and apparatus in the following may be implemented by the computer program unit.

### Embodiment I

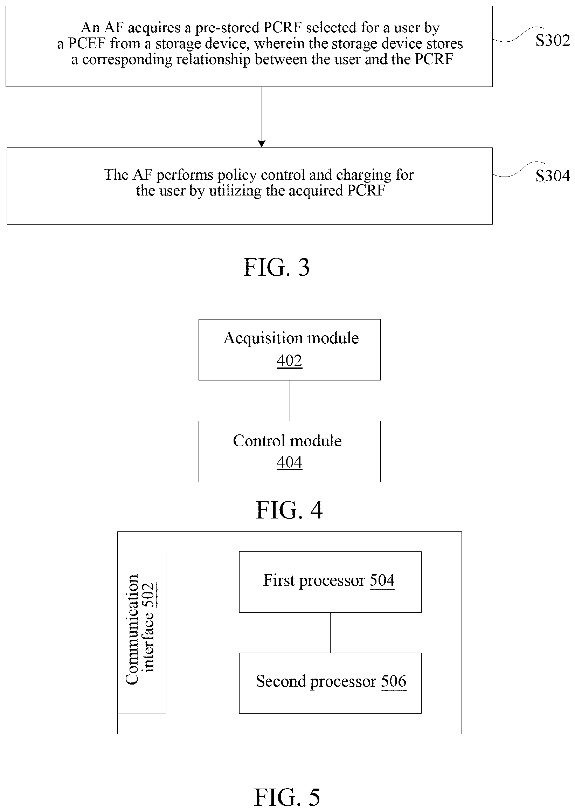

FIG. 3 is a flow chart of a method for policy control and charging according to an embodiment I of the present invention. As shown in FIG. 3, the method includes step S302 to step S304.

In step S302, an AF acquires a pre-stored PCRF selected for a user by a PCEF from a storage device, where the storage device stores a corresponding relationship between the user and the PCRF.

In step S304, the AF performs policy control and charging for the user by utilizing the acquired PCRF.

According to the embodiment of the present invention, the AF acquires the PCRF selected for the user by the PCEF from the storage device so as to guarantee that the PCRFs used by the AF and the PCEF are the same.

In the step S302, the corresponding relationship between the user and the PCRF may be a corresponding relationship between a user identifier and a PCRF identifier, the user identifier is used for distinguishing different users, and the user identifier may be an International Mobile Subscriber Identity (IMSI) of the user and the like; and the PCRF identifier is used for distinguishing different PCRFs, and the PCRF identifier may be an address of the PCRF, a number of the PCRF, a name of the PCRF and the like.

In the embodiment of the present invention, the corresponding relationship may be that in information of each user, a PCRF selected for the user by the PCEF is stored, the information of the user may be subscription information of the user, one field is added in the subscription information of the user, and the PCEF is stored as a PCRF selected by the user; or, one corresponding relationship table is maintained, and in the corresponding relationship table, one column is used for recording users, and the other column is used for recording PCRFs selected for the users by the PCEFs. In consideration of the case that a PCRF may correspond to a plurality of users, the users corresponding to a PCRF can constitute one set, and each PCRF corresponds to one set, so that the data storage volume may be reduced.

In the embodiment of the present invention, alternatively, the following two modes may be adopted to acquire the PCRF selected for the user by the PCEF.

### Mode I:

In step a, in response to a first request of the user, the AF sends a second request to the storage device, wherein the second request carries the user identifier of the user, and the user identifier is used for distinguishing different users.

In step b, the AF receives a response of the storage device to the second request and acquires the PCRF selected for the user by the PCEF from the response.

In Mode I, in response to the first request of the user, the AF acquires the PCRF selected for the user by the PCEF from the storage device. The first request may be an application request of the user, but not limited hereto.

### Mode II:

The AF receives the PCRF which is selected for the user by the PCEF and is pushed by the storage device, wherein the storage device is used for pushing the PCRF selected for the user by the PCEF to the AF when the PCRF selected for the user by the PCEF is changed.

In one optional embodiment of the embodiments of the present invention, before the AF receives the PCRF of the user, which is pushed by the storage device, the method further includes: the AF sends a subscription request to the storage device, wherein the subscription request is used for requesting the storage device to push the PCRF selected for the user by the PCEF to the AF when the PCRF selected for the user by the PCEF is changed.

In the embodiment of the present invention, the storage device may include, but not be limited to, at least one of the followings: a Home Subscriber Server (HSS), a Subscription Profile Repository (SPR), a User Data Center (UDC), a User Data Repository (UDR) and a preset device dedicated for storing PCRFs of the user.

According to the embodiment of the present invention, the acquisition may be direct acquisition, and also may be indirect acquisition. Direct acquisition refers to that devices directly communicate by a communication network to perform acquisition. Indirect acquisition refers to that the devices are subjected to processing by an intermediate device and the devices do not communicate directly.

FIG. 4 is an apparatus for policy control and charging according to an embodiment I of the present invention. As shown in FIG. 4, the policy control and charging apparatus includes: an acquisition module 402, arranged to acquire a pre-stored PCRF selected for a user by a PCEF from a storage device, where the storage device stores a corresponding relationship between the user and the PCRF; and a control module 404, connected with the acquisition module 402 and arranged to perform policy control and charging for the user by utilizing the acquired PCRF.

The corresponding relationship between the user and the PCRF can be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the acquisition module 402 may adopt the following two modes to acquire the PCRF selected for the user by the PCEF.

### Mode I:

The acquisition module 402 includes: a sending unit, arranged to, in response to a first request of the user, send a second request to the storage device, wherein the second request carries the user identifier of the user, and the user identifier is used for distinguishing different users; and an acquisition unit, arranged to receive a response of the storage device to the second request and acquire the PCRF selected for the user by the PCEF from the response.

### Mode II:

The acquisition module 402 includes: a receiving unit, arranged to receive the PCRF which is selected for the user by the PCEF and is pushed by the storage device, wherein the storage device is used for pushing the PCRF selected for the user by the PCEF when the PCRF selected for the user by the PCEF is changed.

In the embodiment of the present invention, the storage device includes, but not be limited to, at least one of the followings: an HSS, an SPR, a UDC, a UDR and a preset device dedicated for storing PCRFs of the user.

According to the embodiment of the present invention, the acquisition may be direct acquisition, and also may be indirect acquisition. Direct acquisition refers to that devices directly communicate by a communication network to perform acquisition. Indirect acquisition refers to that the devices are subjected to processing by an intermediate device and the devices do not communicate directly.

FIG. 5 is a structural block diagram of a device with an AF according to an embodiment of the present invention. As shown in FIG. 5, the device includes: a communication interface 502, arranged to communicate with a storage device, where the storage device stores a corresponding relationship between a user and a PCRF; a first processor 504, arranged to acquire a pre-stored PCRF selected for the user by a PCEF from the storage device; and a second processor 506, arranged to perform policy control and charging for the user by utilizing the acquired PCRF.

In the embodiment of the present invention, the device with the AF may be obtained by adding the AF to other devices, and also may be a device dedicated for achieving the AF. It is not limited in the embodiments of the present invention.

The first processor 504 and the second processor 506 may be the same processor, and also may be different processors.

The corresponding relationship between the user and the PCRF may be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the first processing module 504 may adopt the following two modes to acquire the PCRF selected for the user by the PCEF.

### Mode I:

In response to a first request of the user, the first processor 504 sends a second request to the storage device, wherein the second request carries the user identifier of the user and the user identifier is used for distinguishing different users; and the first processor 504 receives a response of the storage device to the second request and acquires the PCRF selected for the user by the PCEF from the response.

### Mode II:

The first processor 504 receives the PCRF which is selected for the user by the PCEF and is pushed by the storage device, wherein the storage device is used for pushing the PCRF selected for the user by the PCEF when the PCRF selected for the user by the PCEF is changed.

In the embodiment of the present invention, the storage device includes, but not be limited to, at least one of the followings: an HSS, an SPR, a UDC, a UDR and a preset device dedicated for storing PCRFs of the user.

According to the embodiment of the present invention, the acquisition may be direct acquisition, and also may be indirect acquisition. Direct acquisition refers to that devices directly communicate via a communication network to perform acquisition. Indirect acquisition refers to that the devices are subjected to processing by an intermediate device and the devices do not communicate directly.

In the embodiment of the present invention, the first processor 504 and the second processor 506 may be processing units with hardware structures, e.g., programmable logic devices with the function logic, such as a Field Programmable Gate Array (FPGA) and the like, and the function logic may be fired in the programmable logic device in a corresponding mode; and the first processor 504 and the second processor 506 also may be universal processors, the AF device may store a computer program unit for implementing engineering of the processors, and the first processor 504 and the second processor 506 may enforce corresponding units to achieve the function.

The communication interface 502 may be an interface which directly communicates with the storage device, and also may be an interface which communicates with the intermediate device, and the intermediate device completes interaction of the AF device and the storage device. The communication interface may be a special communication interface and may be a specially-designed hardware unit; and the communication interface also may be a universal interface, and the software protocol for communicating with the storage device is added on the basis of the universal interface.

It may be expected that the method and apparatus of the embodiment of the present invention, which are mentioned above, may be implemented by the computer program unit.

### Embodiment II

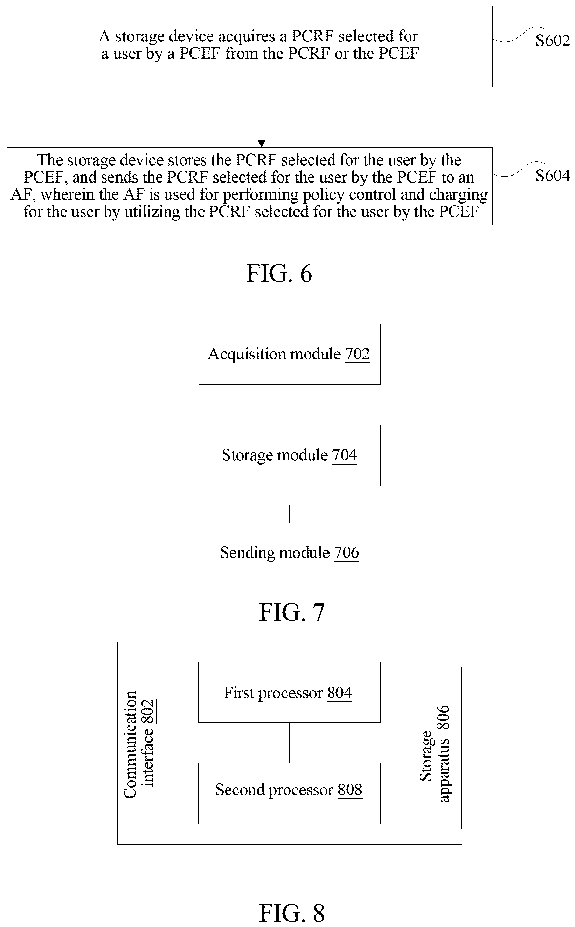

FIG. 6 is a flow chart of a method for sending a PCRF according to an embodiment II of the present invention. As shown in FIG. 6, the method includes step S602 to step S604.

In step S602, a storage device acquires a PCRF selected for a user by a PCEF from the PCRF or the PCEF.

In step S604, the storage device stores the PCRF selected for the user by the PCEF and sends the PCRF selected for the user by the PCEF to an AF, wherein the AF is used for performing policy control and charging for the user by utilizing the PCRF selected for the user by the PCEF.

According to the embodiment of the present invention, the storage device acquires the PCRF selected for the user by the PCEF from the PCRF or the PCEF and sends the PCRF selected for the user by the PCEF to the AF, and the AF performs policy control and charging for the user by utilizing the PCRF selected for the user by the PCEF, so that it is ensured that the PCRFs used by the PCEF and the AF are consistent.

In the embodiment of the present invention, the storage device stores the PCRF selected for the user by the PCEF, and may store a corresponding relationship between the user and the PCRF selected for the user by the PCEF. The corresponding relationship may be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the corresponding relationship may be that in information of each user, a PCRF selected for the user by the PCEF is stored, the information of the user may be subscription information of the user, one field is added in the subscription information of the user, and the PCEF is stored as a PCRF selected by the user; or, one corresponding relationship table is maintained, and in the corresponding relationship table, one column is used for recording users, and the other column is used for recording PCRFs selected for the users by the PCEFs. In consideration of the case that a PCRF may correspond to a plurality of users, the users corresponding to a PCRF can constitute one set, and each PCRF corresponds to one set, so that the data storage volume may be reduced.

In the embodiment of the present invention, the storage device may store the PCRF selected for the user by the PCEF on a local storage apparatus, and also may store the PCRF selected for the user by the PCEF on a network storage apparatus, e.g., a distributed storage system and the like.

The storage apparatus may adopt the following two modes to acquire the PCRF selected for the user by the PCEF.

### Mode I:

In step a, the storage device receives a first request which is sent by the AF and is used for requesting to acquire the PCRF of the user, wherein the first request carries a user identifier of the user, and the user identifier is used for distinguishing different users.

In step b, the storage device, according to a corresponding relationship between the user and the PCRF, searches the PCRF corresponding to the user identifier.

In step c, the storage device sends the PCRF corresponding to the user identifier to the AF.

### Mode II:

In step a, the storage device receives a second request of the AF, wherein the second request is used for requesting to send the PCRF selected for the user by the PCEF to the AF when the PCRF selected for the user by the PCEF is changed.

In step b, the storage device detects whether the PCRF selected for the user by the PCEF is changed.

In step c, when the PCRF selected for the user by the PCEF is changed, the storage device sends the PCRF selected for the user by the PCEF to the AF.

The storage device of the embodiment of the present invention includes at least one of the following: an HSS, an SPR, a UDC, a UDR, and a preset device dedicated for storing PCRFs of the user.

FIG. 7 is a structural block diagram of an apparatus for sending a PCRF according to an embodiment II of the present invention. As shown in FIG. 7, the PCRF sending apparatus includes: an acquisition module 702, arranged to acquire a PCRF selected for a user by a PCEF from the PCRF or the PCEF; a storage module 704, arranged to store the PCRF selected for the user by the PCEF; and a sending module 706, arranged to send the PCRF selected for the user by the PCEF to an AF, wherein the AF is used for performing policy control and charging for the user by utilizing the PCRF selected for the user by the PCEF.

In the embodiment of the present invention, the storage module 704 stores the PCRF selected for the user by the PCEF, and may store a corresponding relationship between the user and the PCRF selected for the user by the PCEF. The corresponding relationship may be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the sending module 706 can send the PCRF selected for the user by the PCEF in two modes in the following.

### Mode I:

The sending module 706 includes: a first receiving unit, arranged to receive a first request which is sent by the AF and is used for requesting to acquire the PCRF of the user, wherein the first request carries a user identifier of the user, and the user identifier is used for distinguishing different users; a searching unit, arranged to search the PCRF corresponding to the user identifier according to a corresponding relationship between the user and the PCRF; and a first sending unit, arranged to send the PCRF corresponding to the user identifier to the AF.

### Mode II:

The sending module 706 includes: a second receiving unit, arranged to receive a second request of the AF, wherein the second request is arranged to request to send the PCRF selected for the user by the PCEF to the AF when the PCRF selected for the user by the PCEF is changed; a detection module, arranged to detect whether the PCRF selected for the user by the PCEF is changed; and a second sending unit, arranged to send the PCRF selected for the user by the PCEF to the AF when the PCRF selected for the user by the PCEF is changed.

In the embodiment of the present invention, the storage module 704 may store the PCRF selected for the user by the PCEF on a local storage apparatus, and also may store the PCRF selected for the user by the PCEF on a network storage apparatus, e.g., a distributed storage system and the like.

Alternatively, the apparatus can be arranged in at least one of the following: an HSS, an SPR, a UDC, a UDR, and a preset device dedicated for storing PCRFs of the user.

FIG. 8 is a structural block diagram of a storage device according to an embodiment of the present invention. The storage device includes: a communication interface 802, arranged to communicate with a PCRF, a PCEF and an AF; a first processor 804, arranged to acquire the PCRF selected for a user by the PCEF from the PCRF or the PCEF; a storage apparatus 806, arranged to store the PCRF selected for the user by the PCEF; and a second processor 808, arranged to send the PCRF selected for the user by the PCEF to the AF, wherein the AF is used for carrying out policy control and charging for the user by utilizing the PCEF.

In the embodiment of the present invention, the storage apparatus 806 may include a local storage apparatus and/or a network storage apparatus.

In the embodiment of the present invention, the storage apparatus 806 stores the PCRF selected for the user by the PCEF, and may store a corresponding relationship between the user and the PCRF selected for the user by the PCEF. The corresponding relationship may be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the second processor 808 may send the PCRF selected for the user by the PCEF in two modes in the following:

### Mode I:

The second processor 808 receives a first request which is sent by the AF and is used for requesting to acquire the PCRF of the user, wherein the first request carries the user identifier of the user and the user identifier is used for distinguishing different users; the second processor 808 searches the PCRF corresponding to the user identifier according to the corresponding relationship between the user and the PCRF; and the second processor 808 sends the PCRF corresponding to the user identifier to the AF.

### Mode II:

The second processor 808 receives a second request of the AF, wherein the second request is used for requesting to send the PCRF selected for the user by the PCEF to the AF when the PCRF selected for the user by the PCEF is changed; the second processor 808 detects whether the PCRF selected for the user by the PCEF is changed; and when the PCRF selected for the user by the PCEF is changed, the second processor 808 sends the PCRF selected for the user by the PCEF to the AF.

Alternatively, the storage device includes at least one of the followings: an HSS, an SPR, a UDC, a UDR and a preset device dedicated for storing PCRFs of the user.

According to the embodiment of the present invention, the acquisition may be direct acquisition, and also may be indirect acquisition. Direct acquisition refers to that devices directly communicate by a communication network to perform acquisition. Indirect acquisition refers to that the devices are subjected to processing by an intermediate device and the devices do not communicate directly.

In the embodiment of the present invention, the first processor 804 and the second processor 808 may be processing units with hardware structures, e.g., programmable logic devices with the function logic, such as an FPGA and the like, and the function logic may be fired in the programmable logic device in a corresponding mode; and the first processor 804 and the second processor 808 also may be universal processors, the AF device may store a computer program unit for implementing engineering of the processors, and the first processor 804 and the second processor 808 may enforce corresponding units to achieve the function.

The communication interface 802 may be an interface which directly communicates with the storage device, and also may be an interface which communicates with the intermediate device, and the intermediate device completes interaction among the PCEF, the PCRF and the AF device and the storage device. The communication interface may be a special communication interface and may be a specially-designed hardware unit; and the communication interface also may be a universal interface, and the software protocol for communicating with the storage device is added on the basis of the universal interface.

In the embodiment of the present invention, the storage device can correspond to the user, and for example, when the storage device is the HSS, the PCRF of the user may be stored by the HSS to which the user belongs.

It may be expected that the method and apparatus of the embodiment of the present invention, which are mentioned above, may be implemented by the computer program unit.

### Embodiment III

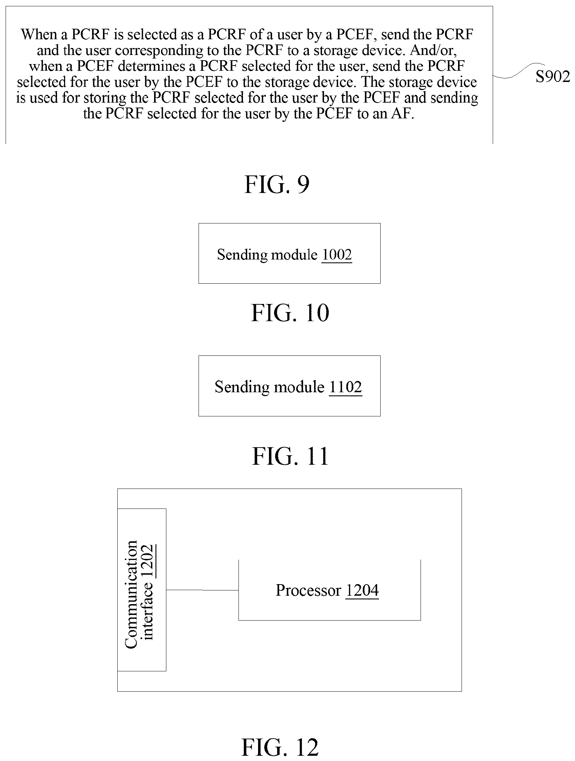

FIG. 9 is a flow chart of a method for sending a PCRF according to an embodiment III of the present invention. As shown in FIG. 9, the method includes the step S902.

In step S902, when a PCRF is selected as a PCRF of a user by a PCEF, the PCRF and the user corresponding to the PCRF are sent to a storage device; and/or when a PCEF determines a PCRF selected for the user, the PCRF selected for the user by the PCEF is sent to the storage device, wherein the storage device is used for storing the PCRF selected for the user by the PCEF and sending the PCRF selected for the user by the PCEF to an AF.

According to the embodiment of the present invention, the PCEF or the PCRF sends the PCRF selected for the user by the PCEF to the storage device, and the storage device stores the PCRF selected for the user by the PCEF and sends the PCRF selected for the user by the PCEF to the AF, so that it is ensured that the PCRFs used by the PCEF and the AF are consistent.

In the step S902, it is determined that the PCRF can be the PCRF selected for the user by the PCEF when the PCRF successfully creates a bearer for the user. Certainly, the determination may be performed at other time, which is not limited in the embodiment of the present invention.

Alternatively, a PCRF is adopted to send the PCRF selected for the user by the PCEF to the storage device, and generally, a small number of PCRF devices exist in the network and a PCRF can manage a plurality of PCEFs, so that by adopting a PCRF to send the PCRF selected for the user by the PCEF, the PCEFs may be convenient to manage.

In the step S902, when a PCRF is selected as the PCRF of the user by the PCEF, the PCRF and the user corresponding to the PCRF are sent to the storage device, and Alternatively, an identifier of the PCRF and a user identifier may be carried in a message; and certainly, if the storage device pre-stores an address of the PCRF or other information capable of being used for identifying the PCRF, the PCRF can carry the user identifier in the message, and for example, the storage device knows an IP address or a Media Access Control (MAC) address of the PCRF in advance and when the storage device receives the message sent by the PCRF, the IP address or the MAC address of the PCRF are parsed from the message header, so that the PCRF which sends the message is determined and the user identifier is read from a message body (i.e., a portion bearing message contents).

In the embodiment of the present invention, the storage device stores the PCRF selected for the user by the PCEF, and may store a corresponding relationship between the user and the PCRF selected for the user by the PCEF. The corresponding relationship may be a corresponding relationship between the user identifier and the PCRF identifier, the user identifier is used for distinguishing different users, the PCRF identifier is used for distinguishing different PCRFs, and the PCRF identifier may be the address of the PCRF, a number of the PCRF, a name of the PCRF and the like.

In the embodiment of the present invention, the corresponding relationship may be that in information of each user, a PCRF selected for the user by the PCEF is stored, the information of the user may be subscription information of the user, one field is added in the subscription information of the user, and the PCEF is stored as a PCRF selected by the user; or, one corresponding relationship table is maintained, and in the corresponding relationship table, one column is used for recording users, and the other column is used for recording PCRFs selected for the users by the PCEFs. In consideration of the case that a PCRF may correspond to a plurality of users, the users corresponding to a PCRF can constitute one set, and each PCRF corresponds to one set, so that the data storage volume may be reduced.

The storage device may include at least one of the followings: an HSS, an SPR, a UDC, a UDR and a preset device dedicated for storing PCRFs of the user.

FIG. 10 is a first structural block diagram of an apparatus for sending a PCRF according to an embodiment III of the present invention. As shown in FIG. 10, the apparatus includes: a sending module 1002, arranged to send a PCRF and a user corresponding to the PCRF to a storage device when a PCRF is selected as the PCRF selected for the user by the PCEF, wherein the storage device is used for storing the PCRF selected for the user by the PCEF and sending the PCRF selected for the user by the PCEF to an AF.

Alternatively, the storage device may include at least one of the followings: an HSS, an SPR, a UDC, a UDR and a preset device dedicated for storing PCRFs of the user.

FIG. 11 is a second structural block diagram of an apparatus for sending a PCRF according to an embodiment III of the present invention. As shown in FIG. 11, the apparatus includes: a sending module 1102, arranged to send a PCRF selected for a user by the PCEF when a PCEF determines the PCRF selected for the user, wherein the storage device is used for storing the PCRF selected for the user by the PCEF and sending the PCRF selected for the user by the PCEF to an AF.

Alternatively, the storage device may include at least one of the followings: an HSS, an SPR, a UDC, a UDR and a preset device dedicated for storing PCRFs of the user.

FIG. 12 is a structural block diagram of a device with a PCRF according to an embodiment of the present invention. As shown in FIG. 12, the device includes: a communication interface 1202, arranged to communicate with a storage device, wherein the storage device is used for storing a PCRF selected for a user by a PCEF and sending the PCRF selected for the user by the PCEF to an AF; and a processor 1204, arranged to send a PCRF and a user corresponding to the PCRF to the storage device when the PCRF is selected as the PCRF of the user by the PCEF.

Alternatively, the storage device may include at least one of the followings: an HSS, an SPR, a UDC, a UDR and a preset device dedicated for storing PCRFs of the user.

In the embodiment of the present invention, the device with the PCRF may be obtained by adding the PCRF to other devices, and also may be a device dedicated for achieving the PCRF. It is not limited in the embodiments of the present invention.

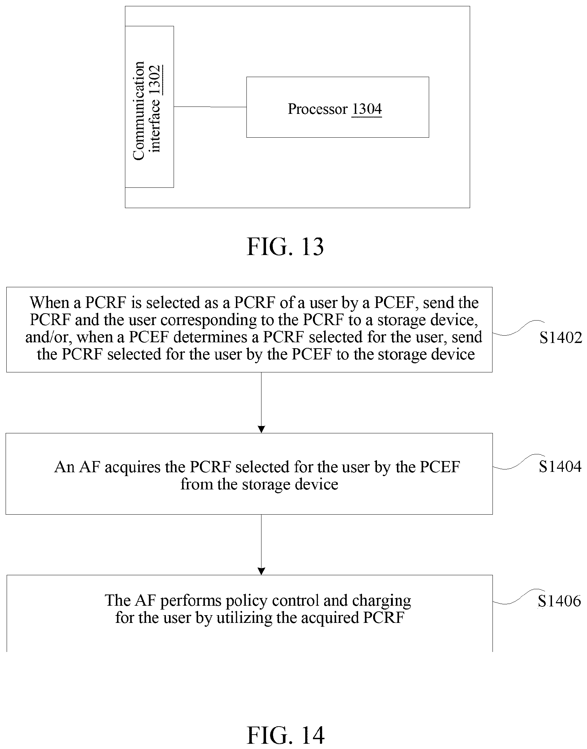

FIG. 13 is a structural block diagram of a device with a PCEF according to an embodiment of the present invention. As shown in FIG. 13, the device includes: a communication interface 1302, arranged to communicate with a storage device, wherein the storage device is used for storing a PCRF selected for a user by a PCEF and sending the PCRF selected for the user by the PCEF to an AF; and a processor 1304, arranged to send a PCRF selected for the user by the PCEF to the storage device when the PCEF determines the PCRF selected for the user.

Alternatively, the storage device may include at least one of the followings: an HSS, an SPR, a UDC, a UDR and a preset device dedicated for storing PCRFs of the user.

In the embodiment of the present invention, the device with the PCRF may be obtained by adding the PCRF to other devices, and also may be a device dedicated for achieving the PCRF. It is not limited in the embodiments of the present invention.

According to the embodiment of the present invention, the sending may be direct sending, and also may be indirect sending. Direct sending refers to that devices directly communicate via a communication network to perform sending. Indirect sending refers to that the devices are subjected to processing by an intermediate device and the devices do not communicate directly.

In the embodiment of the present invention, the processor 1204 and the processor 1304 may be processing units with hardware structures, e.g., programmable logic devices with the function logic, such as an FPGA and the like, and the function logic may be fired in the programmable logic device in a corresponding mode; and the processor 1204 and the processor 1304 also may be universal processors, the AF device may store a computer program unit for implementing engineering of the processors, and the processor 1204 and the processor 1304 may enforce corresponding units to achieve the function.

The communication interface 1302 may be an interface which directly communicates with the storage device, and also may be an interface which communicates with the intermediate device, and the intermediate device completes interaction with the storage device. The communication interface may be a special communication interface and may be a specially-designed hardware unit; and the communication interface also may be a universal interface, and the software protocol for communicating with the storage device is added on the basis of the universal interface.

It may be expected that the method and apparatus of the embodiment of the present invention, which are mentioned above, may be implemented by the computer program unit.

### Embodiment IV

FIG. 14 is a flow chart of a policy control and charging method according to an embodiment IV of the present invention. As shown in FIG. 14, the method includes step S1402 to step S1406.

In step S1402, when a PCRF is selected as a PCRF of a user by a PCEF, the PCRF and the user corresponding to the PCRF are sent to a storage device, and/or when a PCEF determines a PCRF selected for the user, the PCRF selected for the user by the PCEF is sent to the storage device.

In step S1404, an AF acquires the PCRF selected for the user by the PCEF from the storage device.

In step S1406, the AF performs policy control and charging for the user by utilizing the acquired PCRF.

Alternatively, the storage device may include at least one of the followings: an HSS, an SPR, a UDC, a UDR and a preset device dedicated for storing PCRFs of the user.

In the embodiment of the present invention, the storage device stores the PCRF selected for the user by the PCEF, and may store a corresponding relationship between the user and the PCRF selected for the user by the PCEF. The corresponding relationship may be a corresponding relationship between a user identifier and a PCRF identifier, the user identifier is used for distinguishing different users, the PCRF identifier is used for distinguishing different PCRFs, and the PCRF identifier may be an address of the PCRF, a number of the PCRF, a name of the PCRF and the like.

In the embodiment of the present invention, the corresponding relationship may be that in information of each user, a PCRF selected for the user by the PCEF is stored, the information of the user may be subscription information of the user, one field is added in the subscription information of the user, and the PCEF is stored as a PCRF selected by the user; or, one corresponding relationship table is maintained, and in the corresponding relationship table, one column is used for recording users, and the other column is used for recording PCRFs selected for the users by the PCEFs. In consideration of the case that a PCRF may correspond to a plurality of users, the users corresponding to a PCRF can constitute one set, and each PCRF corresponds to one set, so that the data storage volume may be reduced.

In the embodiment of the present invention, alternatively, the following two modes may be adopted to acquire the PCRF selected for the user by the PCEF.

### Mode I:

In step a, in response to a first request of the user, the AF sends a second request to the storage device, wherein the second request carries the user identifier of the user, and the user identifier is used for distinguishing different users.

In step b, the AF receives a response of the storage device to the second request and acquires the PCRF selected for the user by the PCEF from the response.

In the first mode, in response to the first request of the user, the AF acquires the PCRF selected for the user by the PCEF from the storage device. The first request may be an application request of the user, but not limited hereto.

### Mode II:

The AF receives the PCRF which is pushed by the storage device and is selected for the user by the PCEF, wherein the storage device is used for pushing the PCRF selected for the user by the PCEF to the AF when the PCRF selected for the user by the PCEF is changed.

In one optional embodiment of the embodiments of the present invention, before the AF receives the PCRF of the user, which is pushed by the storage device, the method further includes: the AF sends a subscription request to the storage device, wherein the subscription request is used for requesting the storage device to push the PCRF selected for the user by the PCEF to the AF when the PCRF selected for the user by the PCEF is changed.

In the embodiment of the present invention, the storage device can include, but not be limited to, at least one of the followings: an HSS, an SPR, a UDC, a UDR and a preset device dedicated for storing PCRFs of the user.

According to the embodiment of the present invention, the acquisition may be direct acquisition, and also may be indirect acquisition. Direct acquisition refers to that devices directly communicate via a communication network to perform acquisition. Indirect acquisition refers to that the devices are subjected to processing by an intermediate device and the devices do not communicate directly.

### Embodiment V

The embodiment of the present invention relates to a network element, including:
An HSS, which is a core user database. The HSS provides support for entities in an IMS network, which actually manage calls. For example, the HSS accesses information (called as user configuration) related to a user, performs authentication and authorization to the user and provides related information, such as, an IP address of a user position and the like. In the present invention, the HSS implements association of PCRF address information and the user information, and supports reading, update, subscription and notification of the PCRF address information.

A PCRF, which mainly completes a decision control function of a policy. In the present invention, the PCRF supports to directly or indirectly interact with the HSS, and updates an address of the PCRF into the HSS so as to implement association with the user information.

An AF, which takes charge of providing dynamic information related to the user and a service. In the present invention, the AF supports to directly or indirectly interact with the HSS to acquire the PCRF address information associated with the user.

A UDR, which is a server allowing each bit of data to be stored in a centralized manner in a network and is a core user database. Each network element may store data related to the user in the UDR for other network elements to use. The UDR is similar with the HSS, a database in an HSS network element is stripped to become one network element, and the UDR may be arranged in the HSS.

In the embodiment of the present invention, after the PCRF completes establishment of a default bearer of the user, the address of the PCRF is used as the user information and directly or indirectly stored in a uniform user data center, e.g., a HSS to which the user belongs. The AF directly or indirectly acquires the address information of the PCRF from the uniform user data center, e.g., the HSS, so as to implement interaction with the PCRF.

A method disclosed by the embodiment of the present invention includes the following steps:
In step a, a terminal executes normal attachment flow, and a PCEF (P-GW) selects one PCRF for policy control and charging.

In step b, after the PCRF successfully allocates a bearer to the terminal, the PCRF sends a message to the HSS, and the HSS performs association of information (e.g., an IMSI) of the user and the PCRF according to contents in the message.

In step c, when the terminal initiates an application request, the AF directly or indirectly accesses the HSS to acquire the address of the PCRF, and meanwhile, the AF also may subscribe the PCRF address information to the HSS, so that when the address of the PCRF is changed, the AF can be notified.

In step d, the AF performs policy control and charging by using the address of the PCRF, which is acquired from the HSS, so that bearer control and application control of the same user are implemented by the same PCRF.

In the embodiment of the present invention, the PCRF can directly or indirectly store the address of the PCRF itself in the uniform data center which may be an HSS, an SPR, the UDS and the like. The protocol for interaction of the PCRF and the uniform data center (e.g., the HSS, the SPR, the UDC and the like) may be arbitrary. The uniform data center (e.g., the HSS, the SPR, the UDC and the like) can associate the IMSI of the user or other user identifiers when storing the address information of the PCRF. The AF may directly or indirectly read the PCRF address information from the uniform data center (e.g., the HSS, the SPR, the UDC and the like). When reading the address of the PCRF, which corresponds to the user, the AF may use the IMSI of the user or other user identifiers.

Optional implementation modes of the embodiment of the present invention will be described in the following.

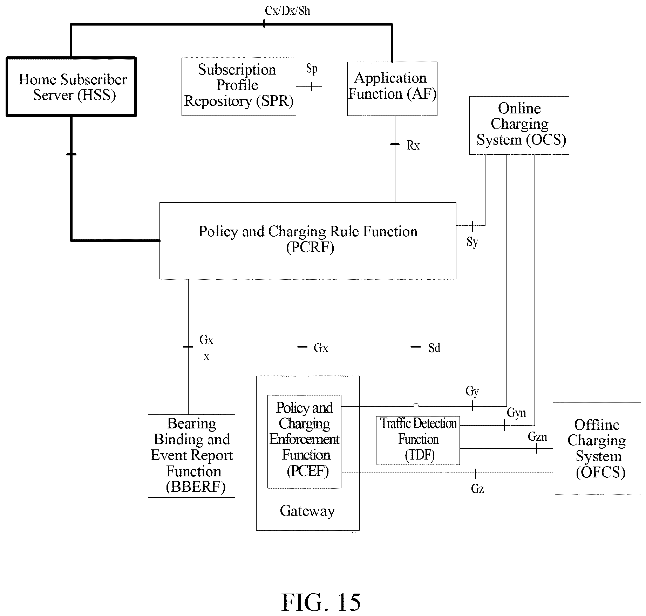

FIG. 15 is a first schematic diagram of a PCC architecture according to an embodiment of the present invention. As shown in FIG. 15, in the PCC architecture, a PCRF stores a PCRF selected for a user by a PCEF in an HSS, and an AF acquires the PCRF selected for the user by the PCEF from the HSS. A communication interface exists between the PCRF and the HSS, and a communication interface exists between the AF and the HSS.

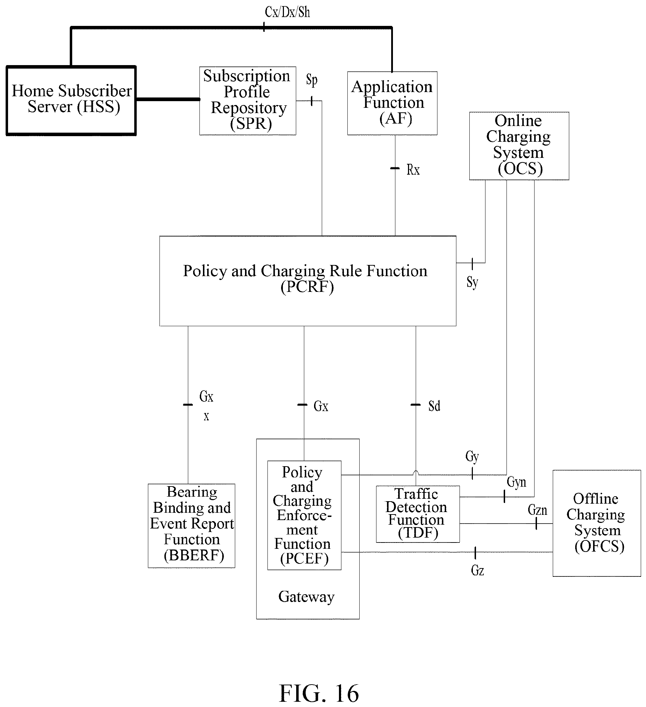

FIG. 16 is a second schematic diagram of a PCC architecture according to an embodiment of the present invention. As shown in FIG. 16, in the PCC architecture, a PCRF stores a PCRF selected for a user by a PCEF in an HSS, and an AF acquires the PCRF selected for the user by the PCEF from the HSS. A communication interface exists between the AF and the HSS. A communication interface exists between the PCRF and an SPR, and the user corresponding to the PCRF is stored to the HSS by the SPR.

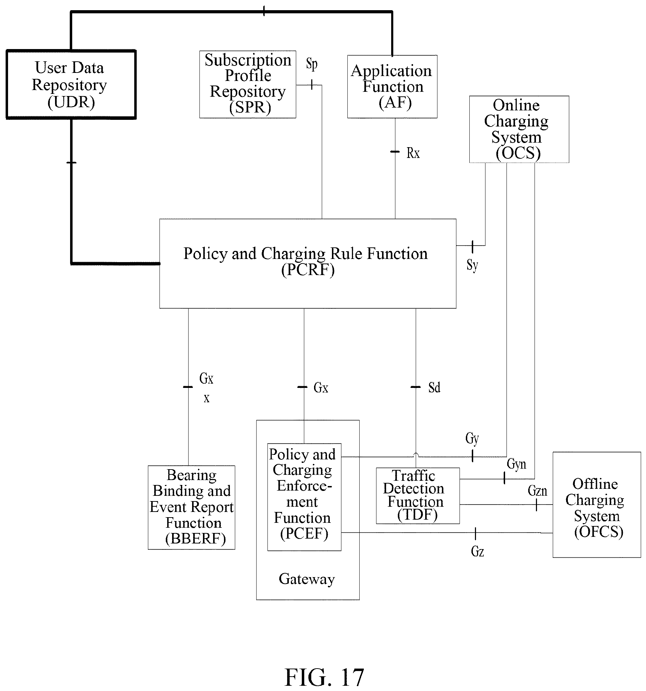

FIG. 17 is a third schematic diagram of a PCC architecture according to an embodiment of the present invention. As shown in FIG. 17, in the PCC architecture, a PCRF stores a PCRF selected for a user by a PCEF into a UDR, and an AF acquires the PCRF selected for the user by the PCEF from the UDR. A communication interface exists between the AF and the UDR. A communication interface exists between the PCRF and the UDR.

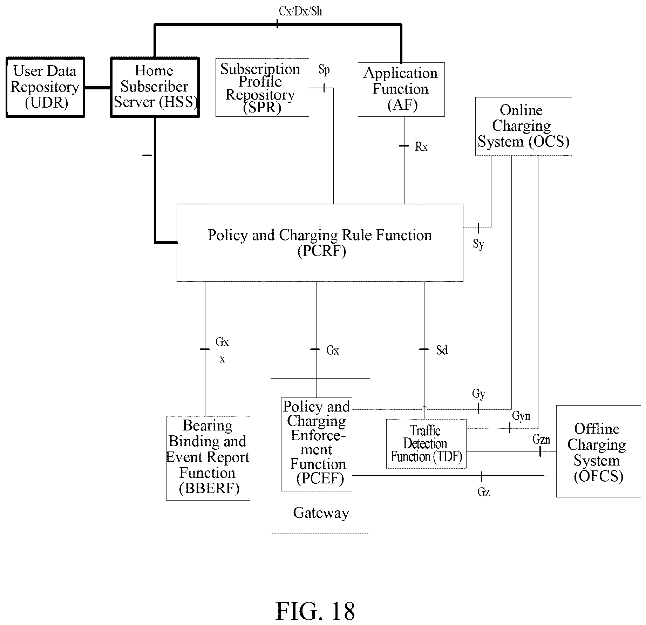

FIG. 18 is a fourth schematic diagram of a PCC architecture according to an embodiment of the present invention. As shown in FIG. 18, in the PCC architecture, a PCRF stores a PCRF selected for a user by a PCEF into an HSS, an AF acquires the PCRF selected for the user by the PCEF from the HSS, and the HSS stores the PCRF selected for the user by the PCEF into a UDR. A communication interface exists between the AF and the HSS. A communication interface exists between the PCRF and the HSS.

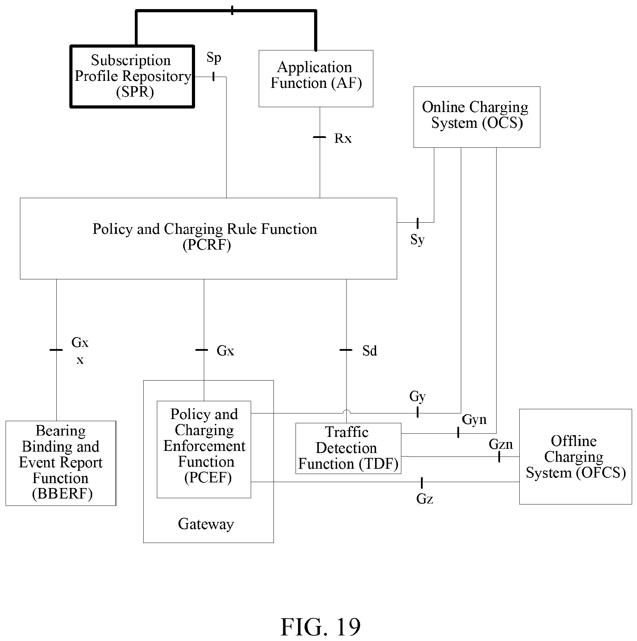

FIG. 19 is a fifth schematic diagram of a PCC architecture according to an embodiment of the present invention. As shown in FIG. 19, in the PCC architecture, a PCRF stores a PCRF selected for a user by a PCEF into an SPR, and an AF acquires the PCRF selected for the user by the PCEF from the SPR. A communication interface exists between the AF and the SPR. A communication interface exists between the PCRF and the SPR.

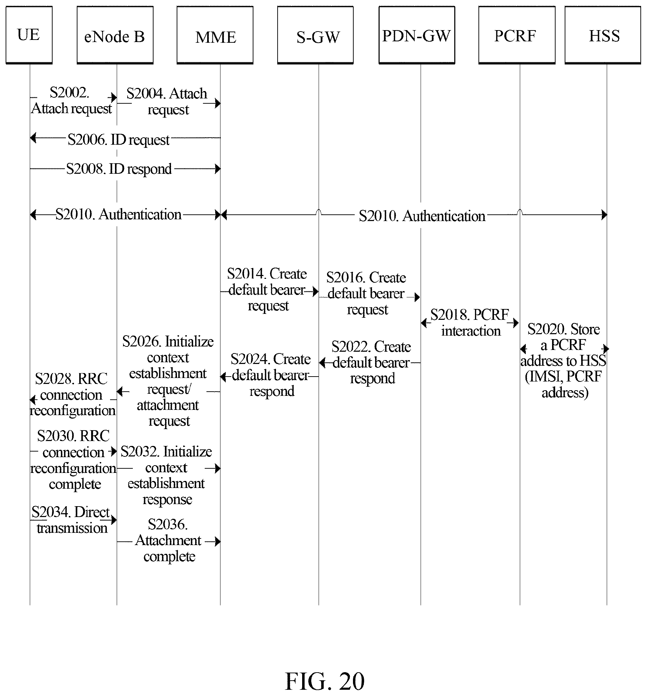

FIG. 20 is a flow chart of an LTE terminal attachment flow according to an embodiment of the present invention. As shown in FIG. 20, a PCRF stores address information of the PCRF itself, which is used as basic information of a user, into an HSS by directly interacting with the HSS. The flow includes step S2002 to step S2036.

In step S2002 to step S2018, the terminal executes a normal attachment flow, and a PCEF (P-GW) selects a PCRF for policy control and charging. Reference can be made to the related technology for the attachment flow, and the attachment flow will not be described in details in the embodiment of the present invention.

In step S2020, the PCRF stores a PCRF address to the HSS.

Alternatively, after the PCRF is successfully controlled to allocate a bearer to the terminal, the PCRF sends a Diameter message to the HSS, where the Diameter message carries IMSI and PCRF address information of the user. The HSS finds the corresponding user according to the IMSI information in the received message sent by the PCRF, and stores the PCRF address into information of the user. The HSS returns a Diameter response to the PCRF.

In step S2022 to step S2036, the attachment process is completed. Reference can be made to the related technology for the subsequent attachment process, and the subsequent attachment process will not be described in details in the embodiment of the present invention.

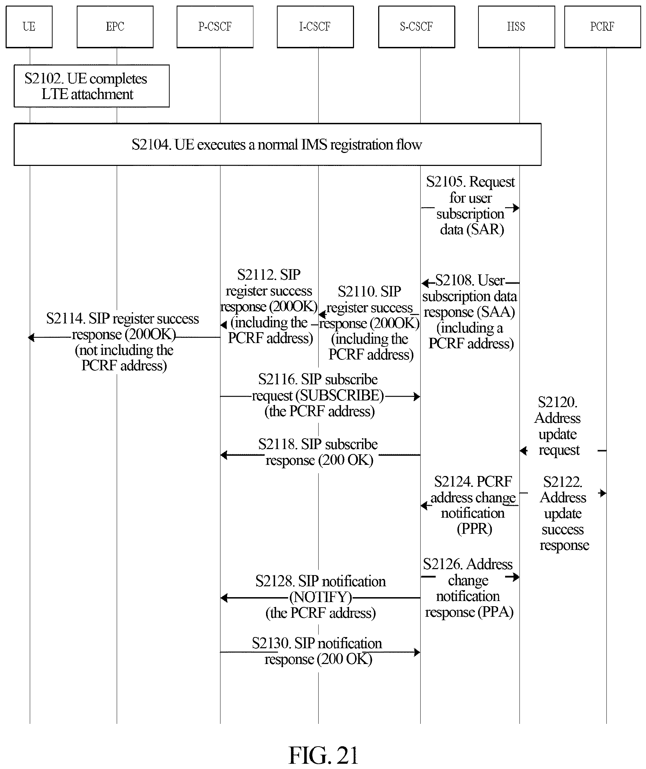

FIG. 21 is a flow chart of indirectly acquiring a PCRF address from an HSS by an AF according to an embodiment of the present invention, where a P-CSCF is used as an AF network element. As shown in FIG. 21, the flow includes step S2102 to step S2130.

In step S2102, a terminal completes an LTE attachment.

In step S2104, the terminal completes an IMS registration. A P-CSCF address is obtained, and the terminal initiates an IMS register request to the P-CSCF. At the moment, a PCRF has updated the address of the PCRF itself into the HSS. After the P-CSCF receives a SIP register request, the P-CSCF completes registration of a user according to a normal IMS registration flow.

In step S2106, after registration of the user is successful, a S-CSCF sends an SAR request to the HSS, and acquires subscription information of the user.

In step S2108, the HSS returns an SAA response to the S-CSCF, where the response includes the PCRF address.

In step S2110 to step S2112, the S-CSCF carries the PCRF address to the P-CSCF in a 2000K response that SIP registration is successful. The P-CSCF may use the PCRF address in the 2000K response as an address of a subsequent policy and charging control.

In step S2114, the P-CSCF sends a SIP register success response (2000K) to the user.

In step S2116 to step S2118, the P-CSCF sends an SIP subscribe request to the S-CSCF for subscribing PCRF information of the user; the S-CSCF subscribes the PCRF information to the HSS; and the S-CSCF returns a subscribe success response.

In step S2120 to step S2126, when the PCRF address is changed, the HSS notifies the S-CSCF by using a Diameter message.

In step S2128 to step S2130, the S-CSCF notifies the P-CSCF by an SIPNOTIFY message.

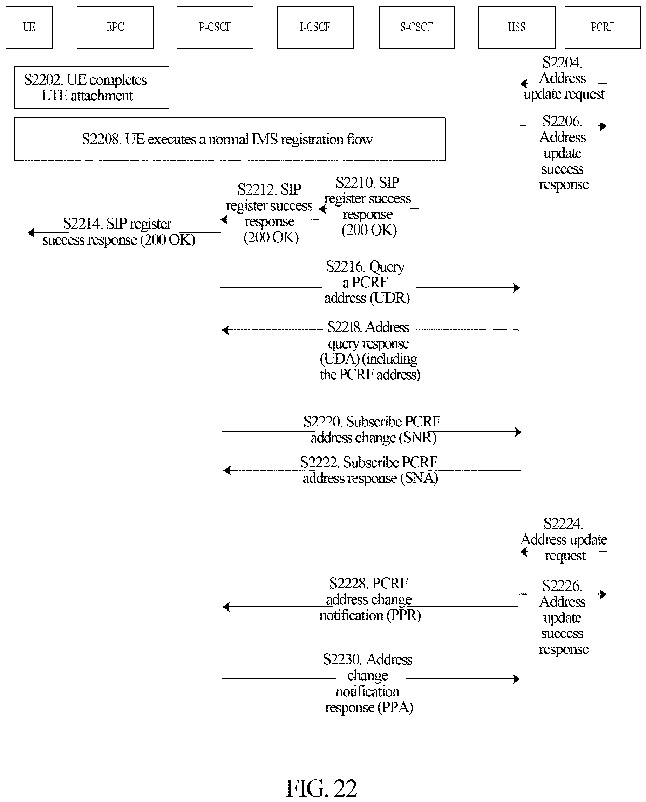

FIG. 22 is a first flow chart of directly acquiring a PCRF address from an HSS by an AF according to an embodiment of the present invention, where a P-CSCF is used as an AF network element. As shown in FIG. 22, the flow includes step S2202 to step S2230.

In step S2202, a terminal completes an LTE attachment.

In step S2204 to step S2206, the PCRF has updated an address of the PCRF itself into the HSS.

In step S2208, the terminal completes an IMS registration flow.

In step S2210 to step S2214, the terminal performs a SIP register success response.

In step S2216, after receiving the SIP register success response, the P-CSCF directly sends a Diameter request to the HSS to request for the PCRF used by the user in the LTE attachment.

In step S2218, the HSS returns a Diameter response to the HSS, where the Diameter response includes the PCRF address, and the P-CSCF locally stores it as user data.

In step S2220, the P-CSCF sends a Diameter request to the HSS to subscribe for address information of the PCRF.

In step S2222, the HSS returns a subscribe response to the P-CSC.

In step S2224 to step S2226, the PCRF address is updated.

In step S2228 to step S2230, when the PCRF address is changed, the HSS sends a Diameter request to the P-CSCF to notify a new PCRF address.

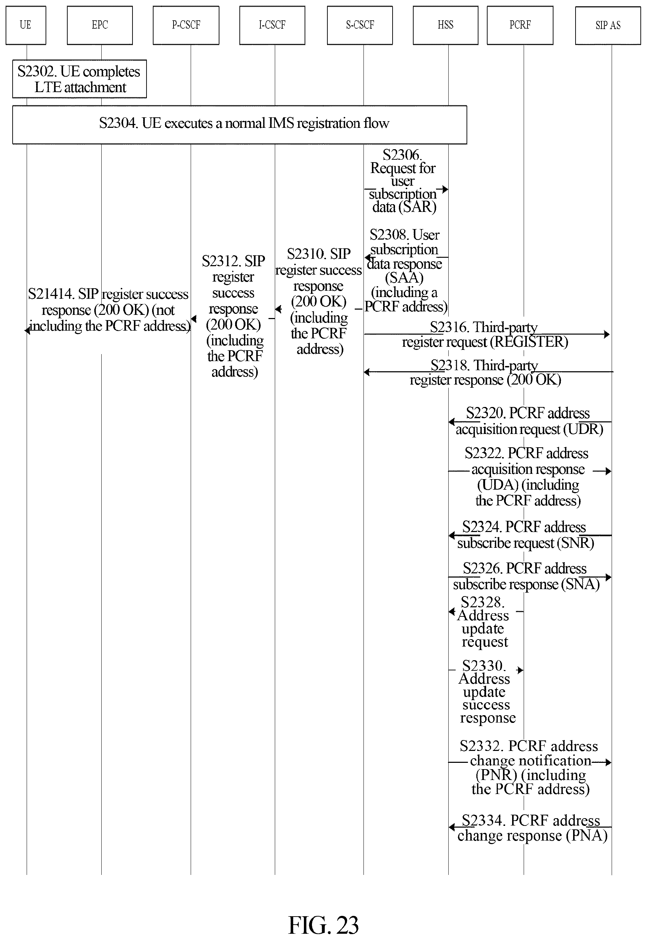

FIG. 23 is a second flow chart of directly acquiring a PCRF address from an HSS by an AF according to an embodiment of the present invention, where an SIPAS is used as an AF network element. As shown in FIG. 23, the flow includes step S2302 to step S2334.

In step S2302 to step S2304, a terminal completes an LTE attachment and an IMS registration flow.

At the moment, a PCRF has updated an address of the PCRF itself into the HSS.

In step S2306, when receiving a third-party register request, the SIPAS directly sends a Diameter request to the HSS to request for the PCRF used by the user in the LTE attachment.

In step S2308, the HSS returns a Diameter response to the SIPAS, where the Diameter response includes the PCRF address, and the SIPAS locally stores the PCRF address as user data.

In step S2310 to step S2314, SIP register response is completed.

In step S2316 to step S2318, a third-party registration is completed.

In step S2320 to step S2322, the SIPAS acquires the PCRF address from the HSS.

In step S2324 to step S2326, the SIPAS sends a Diameter request to the HSS to subscribe address information of the PCRF; and the HSS returns a subscribe response to the SIPAS.

In step S2328 to step S2334, when the PCRF address is changed, the HSS sends a Diameter request to the SIPAS to notify a new PCRF address.

It can be seen from the above descriptions that the present invention achieves the following technical effect: the storage device stores the PCRF selected for the user by the PCEF, and the AF acquires the PCRF selected for the user by the PCEF from the storage device, so that it is ensured that the PCRFs used by the PCEF and the AF are consistent.

Obviously, those skilled in the art should understand that each module or each step of the present invention can be implemented by a universal computing apparatus, can be integrated in one single computing apparatus or distributed in a network consisting of a plurality of computing apparatus, and alternatively, can be implemented by program codes capable of being executed by the computing apparatus, so that each module or each step can be stored in the storage apparatus to be executed by the computing apparatus, and moreover, in some cases, the shown or described steps can be executed in a sequence other than those described herein, or each module or each step is respectively made into each integrated circuit module, or a plurality of modules or steps in all the modules or steps are made into a single integrated circuit module for implementation. Therefore, the present invention is not limited to any one specific hardware and software combination.

The foregoing embodiments merely are preferred embodiments of the present invention, and not intended to define the present invention. Those skilled in the art can make various changes and variations to the present invention. Any modifications, equivalent replacements, improvements and the like without departing from the spirit and the principle of the present invention shall fall within the scope of protection of the present invention.

### Industrial Applicability

Based on the technical scheme provided by embodiments of the present invention, a storage device stores a PCRF selected for a user by a PCEF, and an AF acquires the PCRF selected for the user by the PCEF from the storage device, so that it is ensured that the PCRFs used by the PCEF and the AF are consistent.

## Claims

1. A method for policy control and charging, comprising:
acquiring, by an Application Function (AF), a pre-stored Policy and Charging Rule Function (PCRF) selected for a user by a Policy and Charging Enforcement Function (PCEF) from a storage device, wherein, the storage device stores a corresponding relationship between the user and the PCRF; and
performing, by the AF, policy control and charging for the user by utilizing the acquired PCRF.

2. The method according to claim 1, wherein the step of acquiring, by the AF, the pre-stored PCRF selected for the user by the PCEF from the storage device comprises:
in response to a first request of the user, sending, by the AF, a second request to the storage device, wherein, the second request carries a user identifier of the user, and the user identifier is used for distinguishing different users; and
receiving, by the AF, a response of the storage device to the second request, and acquiring the PCRF selected for the user by the PCEF from the response.

3. The method according to claim 1 or 2, wherein the step of acquiring, by the AF, the pre-stored PCRF selected for the user by the PCEF from the storage device comprises:
receiving, by the AF, the PCRF which is selected for the user by the PCEF and is pushed by the storage device, wherein, the storage device is used for pushing the PCRF selected for the user by the PCEF to the AF when the PCRF selected for the user by the PCEF is changed.

4. The method according to claim 3, wherein, before the AF receives the PCRF of the user, which is pushed by the storage device, the method further comprises:
sending, by the AF, a subscription request to the storage device, wherein, the subscription request is used for requesting the storage device to push the PCRF selected for the user by the PCEF to the AF when the PCRF selected for the user by the PCEF is changed.

5. The method according to claim 1, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

6. A method for sending a Policy and Charging Rule Function (PCRF), comprising:
acquiring, by a storage device, a PCRF selected for a user by a Policy and Charging Enforcement Function (PCEF) from the PCRF or the PCEF; and
storing, by the storage device, the PCRF selected for the user by the PCEF, and sending the PCRF selected for the user by the PCEF to an Application Function (AF), wherein, the AF is used for performing policy control and charging for the user by utilizing the PCRF selected for the user by the PCEF.

7. The method according to claim 6, wherein the step of sending, by the storage device, the PCRF selected for the user by the PCEF to the AF comprises:
receiving, by the storage device, a first request which is sent by the AF and is used for requesting to acquire the PCRF of the user, wherein, the first request carries a user identifier of the user, and the user identifier is used for distinguishing different users;
searching, by the storage device, the PCRF corresponding to the user identifier according to a corresponding relationship between the user and the PCRF; and
sending, by the storage device, the PCRF corresponding to the user identifier to the AF.

8. The method according to claim 6 or 7, wherein the step of sending, by the storage device, the PCRF selected for the user by the PCEF to the AF comprises:
receiving, by the storage device, a second request of the AF, wherein, the second request is used for requesting to send the PCRF selected for the user by the PCEF to the AF when the PCRF selected for the user by the PCEF is changed;
detecting, by the storage device, whether the PCRF selected for the user by the PCEF is changed; and
sending, by the storage device, the PCRF selected for the user by the PCEF to the AF when the PCRF selected for the user by the PCEF is changed.

9. The method according to claim 6, wherein the step of storing, by the storage device, the PCRF selected for the user by the PCEF comprises:
storing, by the storage device, the PCRF selected for the user by the PCEF on a local storage apparatus and/or a network storage apparatus.

10. The method according to claim 6, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

11. A method for sending a Policy and Charging Rule Function (PCRF), comprising:
when a PCRF is selected as a PCRF of a user by a Policy and Charging Enforcement Function (PCEF), sending the PCRF and the user corresponding to the PCRF to a storage device, wherein, the storage device is used for storing the PCRF selected for the user by the PCEF and sending the PCRF selected for the user by the PCEF to an Application Function (AF); and/or,
when a PCEF determines a PCRF selected for the user, sending the PCRF selected for the user by the PCEF to the storage device.

12. The method according to claim 11, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

13. A method for policy control and charging, comprising:
when a Policy and Charging Rule Function (PCRF) is selected as a PCRF of a user by a Policy and Charging Enforcement Function (PCEF), sending the PCRF and the user corresponding to the PCRF to a storage device, and/or, when a PCEF determines a PCRF selected for the user, sending the PCRF selected for the user by the PCEF to the storage device;
acquiring, by an Application Function (AF), the PCRF selected for the user by the PCEF from the storage device; and
performing, by the AF, policy control and charging for the user by utilizing the acquired PCRF.

14. The method according to claim 13, wherein the storage device comprises at least one of the followings: a Home Subscriber Server (HSS), a Subscription Profile Repository (SPR), a User Data Center (UDC), a User Data Repository (UDR) and a preset device dedicated for storing PCRFs of the user.

15. An apparatus for policy control and charging, comprising:
an acquisition module, arranged to acquire a pre-stored Policy and Charging Rule Function (PCRF) selected for a user by a Policy and Charging Enforcement Function (PCEF) from a storage device, wherein, the storage device stores a corresponding relationship between the user and the PCRF; and
a control module, arranged to perform policy control and charging for the user by utilizing the acquired PCRF.

16. The apparatus according to claim 15, wherein the acquisition module comprises:
a sending unit, arranged to, in response to a first request of the user, send a second request to the storage device, wherein, the second request carries a user identifier of the user, and the user identifier is used for distinguishing different users; and
an acquisition unit, arranged to receive a response of the storage device to the second request, and acquire the PCRF selected for the user by the PCEF from the response.

17. The apparatus according to claim 15 or 16, wherein the acquisition module comprises:
a receiving unit, arranged to receive the PCRF which is selected for the user by the PCEF and is pushed by the storage device, wherein, the storage device is used for pushing the PCRF selected for the user by the PCEF when the PCRF selected for the user by the PCEF is changed.

18. The apparatus according to claim 15, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

19. An apparatus for sending a Policy and Charging Rule Function (PCRF), comprising:
an acquisition module, arranged to acquire a PCRF selected for a user by a Policy and Charging Enforcement Function (PCEF) from the PCRF or the PCEF;
a storage module, arranged to store the PCRF selected for the user by the PCEF; and
a sending module, arranged to send the PCRF selected for the user by the PCEF to an Application Function (AF), wherein, the AF is used for performing policy control and charging for the user by utilizing the PCRF selected for the user by the PCEF.

20. The apparatus according to claim 19, wherein the sending module comprises:
a first receiving unit, arranged to receive a first request which is sent by the AF and is used for requesting to acquire the PCRF of the user, wherein, the first request carries a user identifier of the user, and the user identifier is used for distinguishing different users;
a searching unit, arranged to search the PCRF corresponding to the user identifier according to a corresponding relationship between the user and the PCRF; and
a first sending unit, arranged to send the PCRF corresponding to the user identifier to the AF.

21. The apparatus according to claim 19 or 20, wherein the sending module comprises:
a second receiving unit, arranged to receive a second request of the AF, wherein, the second request is used for requesting to send the PCRF selected for the user by the PCEF to the AF when the PCRF selected for the user by the PCEF is changed;
a detection module, arranged to detect whether the PCRF selected for the user by the PCEF is changed; and
a second sending unit, arranged to send the PCRF selected for the user by the PCEF to the AF when the PCRF selected for the user by the PCEF is changed.

22. The apparatus according to claim 19, wherein the storage module is arranged to store the PCRF selected for the user by the PCEF on a local storage apparatus and/or a network storage apparatus.

23. The apparatus according to claim 19, wherein the apparatus is arranged in at least one of the followings: a Home Subscriber Server (HSS), a Subscription Profile Repository (SPR), a User Data Center (UDC), a User Data Repository (UDR) and a preset device dedicated to storing PCRFs of the user.

24. An apparatus for sending a Policy and Charging Rule Function (PCRF), comprising:
a sending module, arranged to, when a PCRF is selected as a PCRF of a user by a Policy and Charging Enforcement Function (PCEF), send the PCRF and the user corresponding to the PCRF to a storage device, wherein, the storage device is used for storing the PCRF selected for the user by the PCEF and sending the PCRF selected for the user by the PCEF to an Application Function (AF).

25. The apparatus according to claim 24, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

26. An apparatus for sending a Policy and Charging Rule Function (PCRF), comprising:
a sending module, arranged to send a PCRF selected for a user by a Policy and Charging Enforcement Function (PCEF) to a storage device when the PCEF determines the PCRF selected for the user, wherein, the storage device is used for storing the PCRF selected for the user by the PCEF and sending the PCRF selected for the user by the PCEF to an Application Function (AF).

27. The apparatus according to claim 26, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

28. A device with an Application Function (AF), comprising:
a communication interface, arranged to communicate with a storage device, wherein, the storage device stores a corresponding relationship between a user and a Policy and Charging Rule Function (PCRF);
a first processor, arranged to acquire a pre-stored PCRF selected for the user by a Policy and Charging Enforcement Function (PCEF) from the storage device; and
a second processor, arranged to perform policy control and charging for the user by utilizing the acquired PCRF.

29. The device according to claim 28, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

30. A storage device, comprising:
a communication interface, arranged to communicate with a Policy and Charging Rule Function (PCRF), a Policy and Charging Enforcement Function (PCEF)and an Application Function (AF);
a first processor, arranged to acquire the PCRF selected for a user by the PCEF from the PCRF or the PCEF;
a storage apparatus, arranged to store the PCRF selected for the user by the PCEF; and
a second processor, arranged to send the PCRF selected for the user by the PCEF to the AF, wherein, the AF is used for performing policy control and charging for the user by utilizing the PCRF selected for the user by the PCEF.

31. The storage device according to claim 30, wherein the storage apparatus comprises a local storage apparatus and/or a network storage apparatus.

32. The storage device according to claim 30, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

33. A device with a Policy and Charging Rule Function (PCRF), comprising:
a communication interface, arranged to communicate with a storage device, wherein, the storage device is used for storing a PCRF selected for a user by a Policy and Charging Enforcement Function (PCEF) and sending the PCRF selected for the user by the PCEF to an Application Function (AF); and
a processor, arranged to send the PCRF and the user corresponding to the PCRF to the storage device when the PCRF is selected as the PCRF of the user by the PCEF.

34. The device according to claim 33, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.

35. A device with a Policy and Charging Enforcement Function (PCEF), comprising:
a communication interface, arranged to communicate with a storage device, wherein, the storage device is used for storing a Policy and Charging Rule Function (PCRF) selected for a user by a PCEF and sending the PCRF selected for the user by the PCEF to an Application Function (AF); and
a processor, arranged to send the PCRF selected for the user by the PCEF to the storage device when the PCEF determines the PCRF selected for the user.

36. The device according to claim 35, wherein the storage device comprises at least one of the followings: a Home Subscriber Server (HSS), a Subscription Profile Repository (SPR), a User Data Center (UDC), a User Data Repository (UDR) and a preset device dedicated to storing PCRFs of the user.
